# EUROPÄISCHE PATENTANMELDUNG

(11) **EP 1 357 324 A2**
(43) Veröffentlichungstag der Anmeldung: **29.10.2003**
(21) Anmeldenummer: 03001441.9
(22) Anmeldetag: 22.01.2003
(51) Int. Cl.: F16L 37/084, B60T 17/04

(54) **Kupplung für Füll- und Entlüftungsarbeiten an hydraulischen Systemen**

(30) Priorität: 23.01.2002 DE 10202349
(71) Anmelder: Rogg, Werner, 78056 Villingen-Schwenningen (DE)
(72) Erfinder: Rogg, Werner, 78056 Villingen-Schwenningen (DE)
(74) Vertreter: Westphal, Mussgnug & Partner

(57) **Zusammenfassung**

Kuppelung zum axialen Ankuppeln an einen Nippel (5) eines Hydraulischen Systems zur Befüllung oder Entlüftung bestehend aus:
- einem hohlzylinderförmig ausgebildeten Gehäuse (1), dessen innere Durchmesser konzentrisch zu einer Achse (7) angeordnet sind,
- einer konzentrisch im Gehäuse (1) eingepaßten und axial zumindest einseitig unterstützten ringförmigen Dichtung (2),
- einem Verbindungselement (6) am in Bezug auf die Einkuppelrichtung (10) rückwärtigen axialen Ende der Kuppelung (11) zum Leitungsanschluß in axialer Richtung,
- einer Öffnung am in Bezug auf die Einkuppelrichtung (10) vorderen axialen Ende der Kupplung (11) zum Einführen des Nippels (5) in Richtung auf die Dichtung (2),
- einem am Gehäuse (1) befestigten radial bewegbaren Klemmhebel (3) zur axialen Fixierung des an die Dichtung (2) angedrückten Nippels (5) relativ zur Kupplung (11), wobei eine vorgebbare axiale Andruckkraft anliegt und der Klemmhebel (3, 13) mittels einer sich gegen das Gehäuse (1) abstützenden Feder (4) federunterstützt in eine am äußeren Umfang des Nippels (5) dargestellte Ausnehmung (9) eingreift.

## Beschreibung

Die Erfindung betrifft eine Kupplung für Füll- und Entlüftungsarbeiten bei hydraulischen Systemen, wobei insbesondere Kupplungs- und Bremssysteme betrachtet werden, die Bestandteil von Kraftfahrzeugen sein können.

Kupplungs- oder Bremssysteme werden häufig in Verbindung mit hydraulischen Systemen realisiert. Um eine Erstbefüllung oder regelmäßige Wartungen daran vorzunehmen weisen diese Systeme mindestens einen Nippel auf. Von einem Versorgungssystem wird entsprechende Hydraulikflüssigkeit über ein Rohrleitungs- oder Schlauchsystem bereitgestellt und über den besagten Nippel in das Kupplungs- oder Bremssystem eingespeist. Die Befüllung eines derartigen Systemes schließt in der Regel ab mit der sogenannten Entlüftung, wobei an vorgegebener Stelle im System befindliche Luft nach außen abgeführt wird indem die Zeit des Befüllungsvorganges entsprechend lang bemessen wird.

Die häufigst verwendete Zuleitung von einem Hydraulik-Versorgungssystem zu dem Befüllungsnippel ist ein Hochdruckschlauch. Dieser Schlauch ist am vorderen Ende mit einem Adapter versehen. Der Adapter wird auf den Nippel des hydraulischen Systemes aufgesteckt und ist über innen liegende Gummiringe abdichtbar. Dabei werden mit einer den wesentlichen Teil des Adapters darstellenden zylinderförmigen Hülse die innen liegenden ringförmigen Gummiringe über den Nippel geschoben, durch Verstellung eines Hebels in axialer Richtung zusammengedrückt und eine Abdichtung durch eine gleichzeitig vorhandene Expansion der Gummiringe in radialer Richtung erzeugt. Der zylinderförmige Körper des Adapters ist dabei ausnahmslos so konstruiert, daß der Nippelaufnahmeöffnung in axialer Richtung der Hebel für die Betätigung der Dichtung gegenüberliegt. Der Mechanismus zum Zusammenpressen der Gummidichtungen nimmt relativ viel Platz dichtungen nimmt relativ viel Platz ein. Die Zuführung von Hydraulikflüssigkeit geschieht über einen Hochdruckanschluss, der radial zu dem zylinderförmigen Adapterkörper ausgerichtet ist, d. h. eine seitlich unter 90° angewinkelte Zuführung darstellt, wodurch die Vorrichtung unhandlich wird. Weiterhin müssen zur Bedienung des Hebels Drehmomente durch das System Adapter/Nippel aufgefangen werden.

Nachdem moderne hydraulische Systeme modifizierte Arbeitsund Platzbedingungen aufweisen kann mit einem beschriebenen Adapter mit einer radial zu diesem ausgerichteten Zuleitung nicht mehr jedes System bedient werden.

Der Erfindung liegt die Aufgabe zugrunde eine Kupplung zum Anschluß an einen Nippel eines hydraulischen Systemes bereitzustellen, der mit einem minimalen Arbeitsbereich betreibbar ist und insbesondere bei der Befüllung- und Entlüftung an Kupplungen oder Bremsen einsetzbar ist.

Die Lösung dieser Aufgabe geschieht durch die Merkmalskombination von Anspruch 1.

Vorteilhafte Ausgestaltungen können den Unteransprüchen entnommen werden.

Der Erfindung liegt die Erkenntnis zu Grunde, dass eine Kupplung für Füll- und Entlüftungsarbeiten an hydraulischen Systemen, insbesondere Kupplungs- und Bremssystemen, die Bestandteil von Kraftfahrzeugen sein können, axial über eine ringförmige Dichtung auf einen Nippel aufgepresst werden kann, wobei ein mit ausreichendem Anpressdruck verbundener Zustand über einen an der Kupplung vorhandenen radial wirkenden Klemmhebel fixierbar ist. Hierzu ist die Kupplung insgesamt hohlzylinderförmig ausgebildet, weist eine im Inneren axial fixierte konzentrisch zu einer zentralen Achse der Kupplung ausgerichtete ringförmige Dichtung auf und beinhaltet den Klemmhebel, der mittels einer sich gegen das Gehäuse abstützenden Feder federunterstützt in eine Ausnehmung an der Oberfläche des Nippels einrastet während eine ausreichende Andruckkraft zwischen der Kupplung bzw. der Dichtung und dem Nippel vorliegt.

Die sich gegen das Gehäuse abstützende Feder kann eine in radialer Richtung angeordnete Zug- oder Druckfeder, eine parallel zur Achse angeordnete Zug- oder Druckfeder oder eine Druckfeder sein.

Die Dichtung ist zur axialen Fixierung entgegen der Einkuppelrichtung hauptsächlich auf einem in der Kupplung vorhandenen großflächigen umlaufenden Absatz abgestützt.

Die axiale Ausführung der Kupplung ermöglicht eine platzsparende Konstruktion. Darüber hinaus wird das durch die Kupplung und den Nippel geführte Leitungssystem axial geradlinig ausgebildet. Dies bedeutet, daß keinerlei Biegungen, insbesondere keine 90° - Führungen wie im Stand der Technik auftreten. Das am rückwärtigen Ende der Kupplung vorhandene Verbindungselement ist ebenfalls zur axial orientierten Weiterführung des Leitungssystemes ausgelegt.

Zur optimierten Beständigkeit der Dichtung gegen mechanische und chemische Beanspruchungen im Betrieb mit einer Hydraulikflüssigkeit ist diese vorteilhaft in Gummi ausgeführt.

Der Klemmhebel zur Fixierung der Kupplung am Nippel ist in einfacher Weise als Schnapphaken mit einer Hebelnase dargestellt. Dieser Schnapphaken wird federunterstützt in die Arbeitsstellung gezogen und kann über eine drehbare Lagerung per Hand aus dieser herausgeschwenkt werden, wobei die Kupplung entriegelt wird. Die Hebelnase ist vorzugsweise formkomplementär zu der vorbeschriebenen Ausnehmung ausgeführt, in welche er eingreift. Da die Ausnehmung üblicherweise rund ausgebildet ist, weist der vordere Teil der Hebelnase ebenfalls eine Rundung auf.

Eine Variation in der Kupplungsdimensionierung bietet eine Auswahl und gleichzeitige Festlegung der im eingekuppelten Zustand notwendigen Andruckkraft um den im Leitungssystem vorhandenen Betriebsdruck zu beherrschen. Bei der Auslegung des axialen Abstandes zwischen der Dichtung der Kupplung und dem Klemmhebel, unter Berücksichtigung der Abmessungen des Nippels, wird die relative axiale Lage zwischen Klemmhebel und Nippel im Betriebszustand festgelegt und eine aus der Verformung der Dichtung beim Einkuppeln entstehende Andruckkraft liegt an. Umgekehrt schnappt der als Schnapphaken ausgebildete Klemmhebel erst in eine Aussparung des Nippels ein, wenn eine minimal notwendige Kraft in axialer Richtung zum einkuppeln aufgebracht wird.

Zum besseren Kontakt zwischen Dichtung und Nippel können in vorteilhafter Weise die beiderseitig zusammenwirkenden Dichtflächen konisch ausgebildet werden. Somit kann die Lebensdauer der Dichtung optimiert werden.

Eine beschriebene Kupplung ist besonders zum Einsatz für die Befüllung oder Entlüftung an hydraulischen Kupplungs- oder Bremssystemen geeignet. Ein Hydraulikversorgungssystem kann dadurch an einen Befüll- und Entlüftungsnippel angekuppelt werden.

Besondere Vorteile der axialen Ausführung der Kupplung liegen in der platzsparenden Bauweise, wobei die Gehäuselänge minimierbar ist. Platzintensive Zuleitungen, die rechtwinkelig an einem Gehäuse angeschlossen sind werden vermieden. Dies ergibt eine erweiterte Einsatzmöglichkeit der Kupplung, so dass auch hydraulische Systeme bedient werden können, deren Anschlussnippel schwer zugänglich sind.

Im folgenden wird anhand der schematischen, die Erfindung nicht einschränkenden Figur ein Ausführungsbeispiel beschrieben.

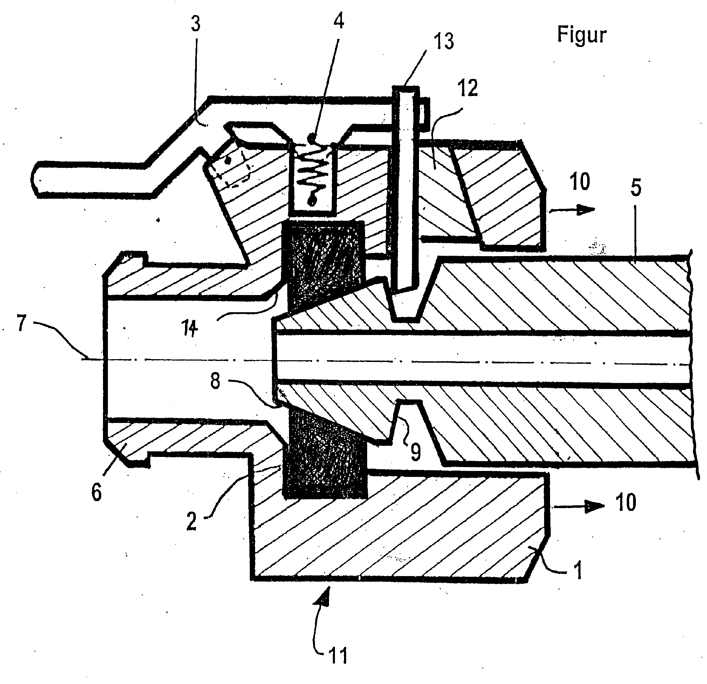

Die Figur zeigt eine Kupplung 11, die an einem Nippel 5 angekuppelt ist.

Die Figur stellt einen Adapter bzw. eine Kupplung 11 mit Schlauchanschluss dar, wobei axial über eine Dichtung 2 aus Gummi eine Abdichtung zwischen Kupplung 11 und Nippel 5 bei gleichzeitiger Fixierung über den Klemmhebel 3 vorliegt. Der Nippel 5 gehört zu einem hydraulischen System mit einer Hydraulikflüssigkeit, einem Kupplungs- oder Bremssystem. Beim Anschließen der Kupplung 2 am Nippel 5 wird die Dichtung 2 stirnseitig auf dessen Kegelstumpf mit entsprechender axialer Andruckkraft aufgesetzt, wobei diese durch den Abstand zwischen Klemmhebel 3, der als Schnapphaken ausgeführt ist, und der Dichtung 2 definiert ist. Der Anschluß der Kupplung 11 erfolgt in axialer Richtung. Das Verbindungselement 6 dient beispielsweise zum Anschluß an einen Hochdruckschlauch.

Die Kupplung 11 weist eine insgesamt hohlzylinderförmige Bauweise auf, wobei innenliegend mehrere unterschiedliche Durchmesser vorhanden sind. Beginnend vom in der Figur links dargestellten Teil schließt sich an einen Innendurchmesser des Verbindungselementes 6 eine Dichtungsaufnahme in Form eines Absatzes an, die die wesentliche Abstützung der Dichtung 2 in axialer Richtung bietet. Das in Einkuppelrichtung 10 vorne liegende Teil der Kupplung 11 weist eine ebenfalls zur Achse 7 konzentrisch angeordnete Öffnung auf, die eine Einführung des Nippels 5 zuläßt, ohne wesentliches Spiel. An dem Gehäuse 1 der Kupplung 11 ist ein Klemmhebel 3 drehbar gelagert befestigt. Dieser Klemmhebel weist eine Hebelnase 13 auf. Diese wird über einen Durchbruch 12 im Gehäuse 1 radial nach innen geführt und schnappt bei eingekuppeltem Zustand vorzugsweise formkomplementär in die Ausnehmung 9 am Nippel 5 ein. Eine benachbart zur Dichtungsaufnahme angebrachte Ansenkung 14 schafft einen zusätzlichen Freiraum für die Deformation der Dichtung 2 beim Aufpressen des Nippels (5). Gleichzeitig ist das gesamte System betriebsbereit für einen Füll- oder Entlüftungsvorgang. Die Andruckkraft ist dabei reproduzierbar.

Je nach Dimensionierung der Kupplung 11 kann diese Kraft variiert werden, indem der axiale Abstand zwischen der Dichtung 2 und dem radial eingreifenden Klemmhebel 3 verändert wird. Auf der Seite des Nippels 5 liegen in der Regel genormte Nippelformen vor, die entsprechend zu berücksichtigen sind. D. h. der Abstand zwischen der konischen Dichtfläche 8 und der als umlaufende Nut ausgeführten Ausnehmung 9 ist vorgegeben. Die aufzubringende Andruckkraft sollte ein Mehrfaches des in dem Leitungssystem vorhandenen Betriebsdruckes betragen.

### Bezugszeichenliste

- 1: Gehäuse
- 2: Dichtung
- 3: Klemmhebel
- 4: Feder
- 5: Nippel
- 6: Verbindungselement
- 7: Achse
- 8: kegelförmige Dichtfläche
- 9: Ausnehmung
- 10: Einkoppelrichtung
- 11: Kupplung
- 12: Durchbruch
- 13: Hebelnase
- 14: Ansenkung

## Patentansprüche

1. Kupplung zum axialen Ankuppeln an einen Nippel (5) eines hydraulischen Systemes zur Befüllung oder Entlüftung bestehend aus:
- einem hohlzylinderförmig ausgebildeten Gehäuse (1), dessen innere Durchmesser konzentrisch zu einer Achse (7) angeordnet sind,
- einer konzentrisch im Gehäuse (1) eingepaßten und axial zumindest einseitig unterstützten ringförmigen Dichtung (2),
- einem Verbindungselement (6) am in Bezug auf die Einkuppelrichtung (10) rückwärtigen axialen Ende der Kupplung (11) zum Leitungsanschluß in axialer Richtung,
- einer Öffnung am in Bezug auf die Einkuppelrichtung (10) vorderen axialen Ende der Kupplung (11) zum Einführen des Nippels (5) in Richtung auf die Dichtung (2),
- einem am Gehäuse (1) befestigten radial bewegbaren Klemmhebel (3) zur axialen Fixierung des an die Dichtung (2) angedrückten Nippels (5) relativ zur Kupplung (11), wobei eine vorgebbare axiale Andruckkraft anliegt und der Klemmhebel (3, 13) mittels einer sich gegen das Gehäuse (1) abstützenden Feder (4) federunterstützt in eine am äußeren Umfang des Nippels (5) dargestellte Ausnehmung (9) eingreift.

2. Kupplung nach Anspruch 1, **dadurch gekennzeichnet, dass** das hydraulische System ein hydraulisches Kupplungs- oder Bremssystem ist.

3. Kupplung nach Anspruch 2, **dadurch gekennzeichnet, dass** die Kupplungs- oder Bremssysteme Bestandteile von Kraftfahrzeugen sind.

4. Kupplung nach einem der vorhergehenden Ansprüche, **dadurch gekennzeichnet, dass** die Dichtung (2) aus Gummi besteht.

5. Kupplung nach einem der vorhergehenden Ansprüche, **dadurch gekennzeichnet, dass** der Klemmhebel (3) mit einer Hebelnase (13) versehen als Schnapphaken ausgebildet ist.

6. Kupplung nach einem der vorhergehenden Ansprüche, **dadurch gekennzeichnet, dass** die axiale Andruckkraft zwischen Dichtung (2) und Nippel (5) ein Mehrfaches des Betriebsdruckes des in der Kupplung (11) und dem Nippel (5) geführten Mediums beträgt.

7. Kupplung nach einem der vorhergehenden Ansprüche, **dadurch gekennzeichnet, dass** Dichtung (2) und Nippel (5) jeweils konisch zusammenwirkende Dichtflächen aufweisen.

8. Kupplung nach einem der vorhergehenden Ansprüche, **dadurch gekennzeichnet, dass** die Feder eine in radialer Richtung angeordnete Zug- oder Druckfeder (4), eine parallel zur Achse (7) angeordnete Zug- oder Druckfeder oder eine Druckfeder ist.

9. Kupplung nach einem der vorhergehenden Ansprüche, **dadurch gekennzeichnet, dass** die Hebelnase (13) formkomplementär zu der Ausnehmung (9)ausgebildet ist.
